# EUROPÄISCHE PATENTSCHRIFT

(11) **EP 1 380 016 B1**
(45) Veröffentlichungstag und Bekanntmachung des Hinweises auf die Patenterteilung: **06.07.2005**
(21) Anmeldenummer: 01986889.2
(22) Anmeldetag: 17.12.2001
(51) Int. Cl.: G01R 33/032

(54) **VORRICHTUNGEN UND VERFAHREN ZUR UNTERSUCHUNG VON MAGNETISCHEN EIGENSCHAFTEN VON OBJEKTEN**
DEVICES AND METHODS FOR INVESTIGATING THE MAGNETIC PROPERTIES OF OBJECTS
DISPOSITIFS ET PROCEDE D'EXAMEN DE PROPRIETES MAGNETIQUES D'OBJETS

(30) Priorität: 22.12.2000 DE 10064758; 22.12.2000 DE 10065868; 26.01.2001 DE 10103378; 26.01.2001 DE 10103379
(43) Veröffentlichungstag der Anmeldung: 14.01.2004
(73) Patentinhaber: Giesecke & Devrient GmbH, 81677 München (DE)
(72) Erfinder: SCHÜTZMANN, Jürgen, 85276 Pfaffenhofen (DE); SCHANDA, Ulrich, 83607 Holzkirchen (DE)
(74) Vertreter: Klunker . Schmitt-Nilson . Hirsch
(86) Internationale Anmeldenummer: PCT/EP2001/014894
(87) Internationale Veröffentlichungsnummer: WO 2002/052512

(56) Entgegenhaltungen:
- EP-A- 0 577 114
- DE-A- 19 718 122
- US-A- 3 764 195
- US-A- 4 112 367
- US-A- 4 823 083
- GERTHSEN, KNESER, VOGEL: "Physik" 1989 , SPRINGER , 16. AUFLAGE XP002251042 Absatz [10.2.4]

## Beschreibung

Die Erfindung betrifft Vorrichtungen und ein Verfahren zur Untersuchung magnetischer Eigenschaften von Objekten, insbesondere Blattgut, wie z.B. Banknoten. Die Vorrichtungen umfassen eine magnetooptische Schicht, deren optische Eigenschaften von den magnetischen Eigenschaften des Objekts beeinflußbar sind, eine Lichtquelle zur Erzeugung von Licht, welches in die magnetooptische Schicht eingekoppelt wird, und einen Detektor zur Detektion von Licht, welches von der magnetooptischen Schicht transmittiert und/ oder reflektiert wird.

Zur Gewährleistung einer hohen Fälschungssicherheit werden Banknoten unter anderem mit magnetischen Merkmalen versehen. Bei der automatisierten Banknotenprüfung in Banknotenbearbeitungsmaschinen werden daher Banknoten auch auf ihre magnetischen Eigenschaften hin untersucht, um gefälschte oder fälschungsverdächtige von echten Banknoten zu unterscheiden.

Die Untersuchung der magnetischen Eigenschaften von Banknoten erfolgt hierbei meist unter Verwendung von induktiven Meßköpfen, Hall-Elementen oder magnetoresistiven Elementen, wie beispielsweise Feldplatten oder dünnen Permalloy-Schichten.

Darüber hinaus ist bekannt, die magnetischen Eigenschaften von Banknoten unter Verwendung von magnetooptischen Schichten zu untersuchen. Eine geeignete Vorrichtung ist beispielsweise aus der deutschen Offenlegungsschrift DE 19718122 A1 bekannt. Eine magnetooptische Reflektorschicht mit hohem magnetischen Kerr-Effekt wird hierin mit polarisiertem Licht beleuchtet und das reflektierte Licht nach Durchlaufen eines Polarisationsfilters detektiert. Wird eine zu untersuchende Banknote dicht hinter die Reflektorschicht gebracht, so beeinflussen die magnetischen Streuflüsse der magnetischen Bereiche der Banknote das optische Verhalten der Reflektorschicht, wobei die Polarisationsrichtung des detektierten Lichts verändert wird. Aus der gemessenen Veränderung der Polarisation kann dann auf die magnetischen Eigenschaften des Blattguts geschlossen werden.

Gegenüber anderen Meßverfahren und -anordnungen, z.B. induktiven Meßköpfen, hat die Verwendung von magnetooptischen Schichten den Vorteil, daß diese eine hohe Ortsauflösung erlauben und die Messung der magnetischen Flüsse unabhängig von der Geschwindigkeit der Banknote relativ zum Meßsystem ist.

Bei der maschinellen Untersuchung der magnetischen Eigenschaften von Banknoten tritt insbesondere das Problem auf, daß sehr kleine Magnetflußdichten nachgewiesen werden müssen, um eine ausreichend genaue und zuverlässige Überprüfung der Echtheit gewährleisten zu können. Dies ist dadurch bedingt, daß zum einen die von den einzelnen magnetischen Bereichen der Banknoten verursachten Streuflüsse sehr klein sind, und zum anderen die typischen Abstände zwischen Banknote und magnetooptischer Schicht aufgrund der bei Banknotenbearbeitungsmaschinen geforderten hohen Transportgeschwindigkeit nicht beliebig klein sein können, weil dies sonst zu einem erhöhten Verschleiß der zu überprüfenden Banknoten sowie einzelner Sensorkomponenten führen würde und darüber hinaus eine erhöhte Staugefahr zur Folge hätte.

Aus der US 4,823,083 A und der US 4 112 367A ist es bekannt, magnetische Eigenschaften von Objekten mittels einer magnetooptischen Schicht zu bestimmen, deren optische Eigenschaften von den magnetischen Eigenschaften des zu untersuchenden Objekts beeinflußt werden. Dabei ist es vorgesehen, Licht derart in die magnetooptische Schicht einzukoppeln, daß seine Ausbreitungsrichtung im wesentlichen parallel zu einer Grundfläche der magnetooptischen Schicht verläuft. Aus dem Lehrbuch "Physik" von Gerthsen, Kneser, Vogel, erschienen im Springer-Verlag, 16. Auflage, Kapitel 10.2.4, ist es zudem bekannt, für die Einkopplung des Lichts in die magnetooptische Schicht einen Winkel zu wählen, der dem Brewster-Winkel entspricht, um Interferenzen zu vermeiden und um eine maximale optische Einkopplung zu erzielen.

Es ist Aufgabe der vorliegenden Erfindung, eine Vorrichtung anzugeben, welche eine genauere und zuverlässigere Untersuchung magnetischer Eigenschaften von Blattgut erlaubt.

Diese Aufgabe wird durch die Vorrichtung gemäß Anspruch 1 gelöst.

Der Lösung der Aufgabenstellung durch die Vorrichtung gemäß Anspruch 1 liegt der erfinderische Gedanke zugrunde, die Veränderung, d.h. Drehung, der Polarisationsrichtung des in die magnetooptische Schicht eingekoppelten Lichts zu vergrößern. Hierdurch wird die Empfindlichkeit der Meßvorrichtung erhöht, so daß selbst sehr kleine Magnetfelder mit einer ausreichend hohen Genauigkeit und Zuverlässigkeit untersucht werden können. Die Drehung der Polarisationsrichtung wird bei der Vorrichtung durch einen geeigneten Aufbau des aus magnetooptischer Schicht und Substrat bestehenden Systems erreicht.

Dabei ist vorgesehen, daß die magnetooptische Schicht zumindest teilweise aus Eisen-Granaten besteht und auf einem Substrat aufgebracht ist, welches zumindest teilweise aus Gallium-Granaten besteht, wobei in den Gallium-Granaten des Substrats Sauerstoff zumindest teilweise durch Schwefel substituiert ist. Eisen-Granate werden durch Verbindungen auf der Basis von Eisen-Granat (RE₃Fe₅O₁₂) gebildet, wobei RE₃ drei Seltenerdmetall-Elemente umfaßt und Eisen (Fe) und/ oder Sauerstoff (O) zumindest teilweise durch jeweils ein oder mehrere andere Elemente substituiert werden können. Bei Gallium-Granaten handelt es sich um Verbindungen auf der Basis von Gallium-Granat (RE₃Ga₅O₁₂), wobei RE₃ drei Seltenerdmetall-Elemente umfaßt und Gallium (Ga) und/ oder Sauerstoff (O) zumindest teilweise durch jeweils ein oder mehrere andere Elemente substituiert werden können.

Durch die zumindest teilweise Substitution von Sauerstoff im Substrat durch Schwefel wird die Gitterkonstante des Substrats vergrößert, was wiederum eine Substitution von Seltenerdmetallen, z.B. Yttrium, in der magnetooptischen Schicht durch empfindlichkeitssteigernde Elemente, insbesondere Wismut, mit größerem Atom- und/oder Ionenradius ermöglicht. Auf diese Weise kann der Winkel der Polarisationsdrehung, welcher beim magnetooptischen Faraday-Effekt proportional zu einer von der Zusammensetzung des magnetooptischen Materials beeinflußten Materialkonstante ist, deutlich vergrößert werden.

Insgesamt läßt sich damit eine genauere und zuverlässigere Untersuchung selbst sehr kleiner Magnetfelder, insbesondere auf Banknoten, durchführen. Gleichzeitig ist aufgrund der hohen Empfindlichkeit der erfindungsgemäßen Vorrichtungen ein relativ großer Abstand zwischen Banknote und magnetooptischer Schicht möglich, wodurch hohe Transportgeschwindigkeiten der zu untersuchenden Banknoten bei geringerem Verschleiß und deutlich reduzierter Staugefahr erreicht werden können.

Durch die erfindungsgemäße Vorrichtung lassen sich außerdem hohe räumliche Auflösungen erreichen, so daß diese besonders geeignet ist zur Untersuchung der magnetischen Eigenschaften von mit magnetischer Tinte erzeugten Druckbildern, von magnetischen Schichten oder von magnetischen, insbesondere unterbrochenen oder kodierten, Sicherheitsfäden oder Sicherheitsbändern auf bzw. in Banknoten oder Sicherheitsdokumenten.

Die Erfindung wird nachfolgend anhand von in Figuren dargestellten Ausführungsbeispielen näher erläutert. Es zeigen:
- Fig. 1: eine erfindungsgemäße Vorrichtung mit parallel zur Grundfläche der magnetooptischen Schicht verlaufendem Licht;
- Fig. 2: ein Beispiel für eine im wesentlichen parallel zur Grundfläche der Schicht verlaufende Lichtausbreitung bei seitlicher Einkopplung;

- Fig. 3: ein weiteres Beispiel für eine im wesentlichen parallel zur Grundfläche der Schicht verlaufende Lichtausbreitung bei Einkopplung über eine Grundfläche der Schicht; und
- Fig. 4: eine Vorrichtung mit einem erfindungsgemäßen Aufbau des SubstratSchicht-Systems.

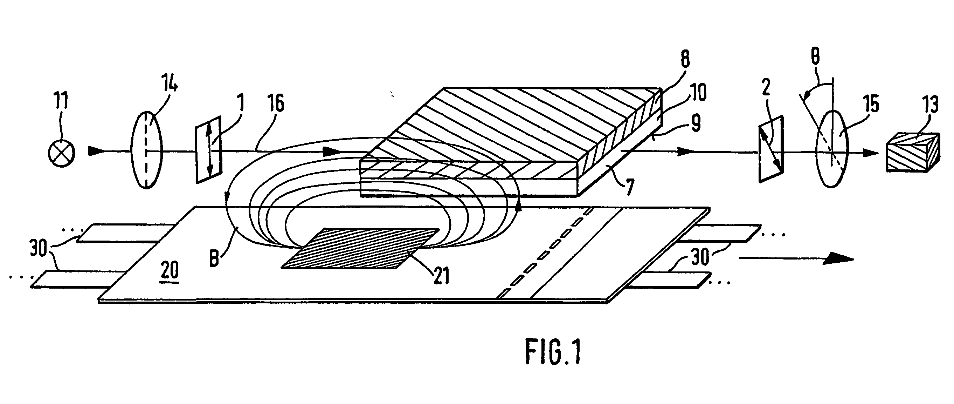

Figur 1 zeigt ein Ausführungsbeispiel mit parallel zu einer Grundfläche 9 der magnetooptischen Schicht 10 verlaufendem Licht. Eine Banknote 20 mit einem magnetischen Bereich 21 wird mittels eines - nur andeutungsweise dargestellten - Transportsystems 30 in die Nähe der magnetooptischen Schicht 10 transportiert. Die Lichtquelle 11, bevorzugterweise ein Laser oder eine Laserdiode, die magnetische Schicht 10 sowie der Detektor 13, vorzugsweise eine Photodiode, sind hierbei so angeordnet, daß die Ausbreitungsrichtung des in die Schicht 10 eingekoppelten Lichts im wesentlichen parallel zur Grundfläche 9 der Schicht 10 verläuft und das aus der Schicht 10 austretende Licht vom Detektor 13 detektiert werden kann. Im Sinne der Erfindung ist unter einer im wesentlichen parallelen Ausbreitung auch zu verstehen, daß die magnetooptische Schicht 10 geringfügig, d.h. wenige Winkelgrade, gegenüber dem eingekoppelten Lichtstrahl 16 geneigt sein kann, um einen möglichst großen optischen Weg des eingekoppelten Lichts durch die Schicht 10 zu erreichen. Zwischen magnetooptischer Schicht 10 und Lichtquelle 11 bzw. Detektor 13 ist jeweils ein Polarisationsfilter 14 bzw. 15 angeordnet. Das von dem Polarisationsfilter 14 durchgelassene Licht hat vor dem Eintritt in die magnetooptische Schicht 10 eine definierte Polarisation 1. Je nach Verlauf und Stärke des vom magnetischen Bereich 21 der Banknote 20 herrührenden magnetischen Streufeldes werden die optischen Eigenschaften der magnetooptischen Schicht 10 beeinflußt und infolgedessen die Polarisationsdrehung des die Schicht durchlaufenden Lichts verändert (Faraday-Effekt). Nach dem Durchlaufen der Schicht weist das Licht eine Polarisation 2 auf, welche i.a. gegenüber der Polarisation 1 des eintretenden Lichts 16 um einen Polarisationswinkel θ gedreht ist. Je nach Größe des Polarisationswinkels θ und Stellung des Polarisationsfilters 15 variiert die mit dem Detektor 13 detektierte Intensität, aus welcher dann auf die magnetischen Eigenschaften der untersuchten Banknote 20 geschlossen werden kann.

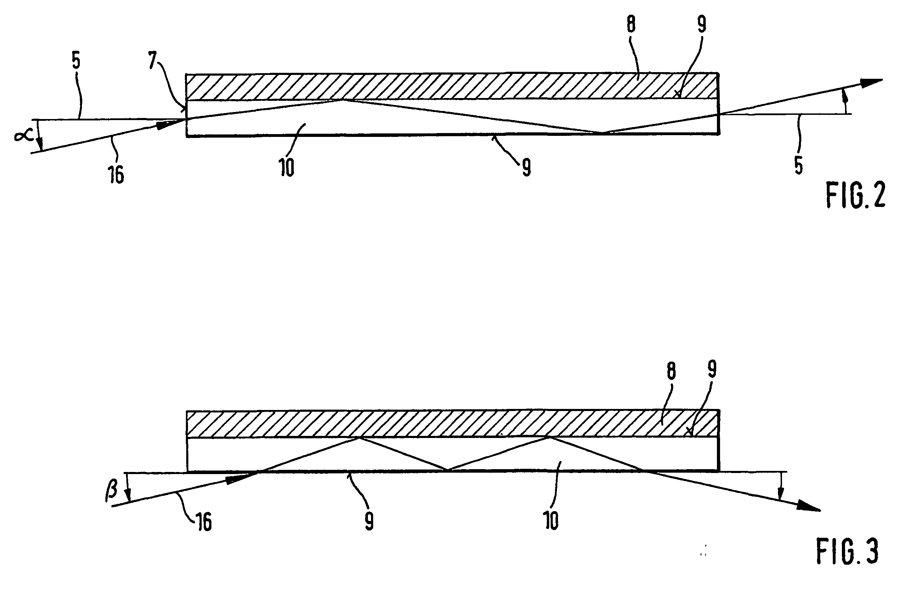

Figur 2 zeigt ein Beispiel für eine im wesentlichen parallel zur Grundfläche 9 der Schicht 10 verlaufende Ausbreitungsrichtung des eingekoppelten Lichts. Das einzukoppelnde Licht 16 trifft im Bereich einer Seitenfläche 7 auf die magnetooptische Schicht 10 und schließt mit dem parallel zur Grundfläche 9 verlaufenden Lot 5 einen flachen Winkel α ein, welcher typischerweise im Bereich zwischen etwa 0 und 12 Grad liegt. Auf das in dieser Weise eingekoppelte Licht wirkt die Schicht 10 dann wie ein Wellenleiter, an dessen Grenzflächen, d.h. Grundflächen 9, das schräg einfallende Licht mit vernachlässigbaren Verlusten reflektiert wird und sich dabei im wesentlichen parallel zur Grundfläche 9 der Schicht 10 ausbreitet. Die Reflexion erfolgt im dargestellten Beispiel an der Grenzfläche zwischen der Schicht 10 und der Umgebung bzw. dem Substrat 8.

Wie in Figur 3 dargestellt, kann das Licht alternativ auch im Bereich einer Grundfläche 9 der Schicht 10 eingekoppelt werden. In diesem Beispiel ist der Winkel β, den das einzukoppelnde Licht 16 mit der Grundfläche 9 einschließt, entsprechend klein zu wählen, d.h. kleiner als etwa 10 Grad, um einen möglichst langen optischen Weg in der Schicht 10 bei gleichzeitig geringen Verlusten durch Mehrfachreflexionen zu erreichen. Ist das Substrat 8, auf welchem sich die magnetooptische Schicht 10 befindet, für das einzukoppelnde Licht 16 durchlässig, so kann die Einkopplung auch über das Substrat 8 erfolgen.

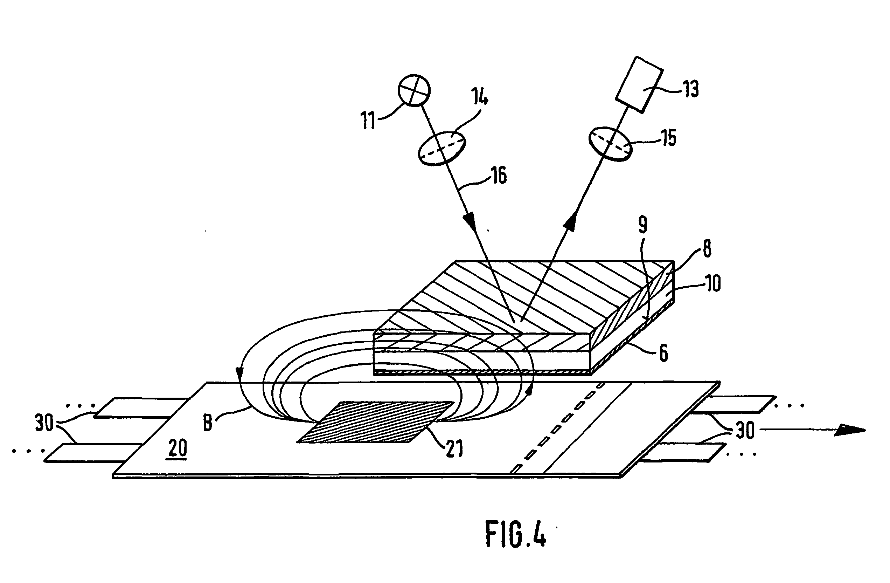

Figur 4 zeigt die Ausführungsform einer Vorrichtung mit einem aus dem Substrat 8 und der Schicht 10 bestehenden Substrat-Schicht-System, welches die erfindungsgemäße Zusammensetzung aus Gallium- bzw. Eisen-Granaten aufweist, wobei in den Gallium-Granaten des Substrats 8 Sauerstoff zumindest teilweise durch Schwefel substituiert ist. Da in dieser Zusammensetzung des Substrat-Schicht-Systems die Empfindlichkeit der magnetooptischen Schicht deutlich erhöht ist, insbesondere bei einer Substitution von Seltenerdmetall-Elementen der Schicht 10 durch Wismut, ist bereits ein relativ kurzer optischer Weg des eingekoppelten Lichts durch die Schicht 10 ausreichend, um eine große Zuverlässigkeit und Genauigkeit bei der Untersuchung kleiner Magnetfelder zu gewährleisten. Daher sind in diesem Beispiel die Lichtquelle 11 und die magnetooptische Schicht 10 so angeordnet, daß das einzukoppelnde Licht 16 in einem steilen Winkel, welcher typischerweise zwischen 70 und 90 Grad liegt, zur Grundfläche 9 der Schicht 10 eingekoppelt wird. Wie in Figur 1 ist auch in diesem Ausführungsbeispiel ein Transportsystem 30, welches eine Banknote 20 mit einem magnetischen Bereich 21 an der Schicht 10 vorbeitransportiert, vorgesehen. Darüber hinaus sind ebenfalls zwischen der magnetooptischen Schicht 10 und der Lichtquelle 11 bzw dem Detektor 13 Polarisationsfilter 14 bzw. 15 angeordnet, um die durch die Schicht 10 verursachte Drehung der Polarisationsrichtung des Lichts analysieren zu können.

Im dargestellten Beispiel der Figur 4 ist das Substrat 8 für das einzukoppelnde Licht 16 durchlässig. Die vom Substrat 8 abgewandte Grundfläche 9 der magnetooptischen Schicht 10 ist außerdem mit einer Verspiegelung 6 versehen. Das eingekoppelte Licht durchläuft zuerst das Substrat 8 und dann die Schicht 10, wird anschließend an der Verspiegelung 6 reflektiert und kann nach einem weiteren Durchlauf durch die Schicht 10 und das Substrat 8 vom Detektor 13 detektiert werden.

Alternativ kann die Schicht 10 auch auf ein für das eingekoppelte Licht undurchlässiges Substrat 8 aufgebracht sein (nicht dargestellt). In diesem Fall erfolgt die Einkopplung direkt in die Schicht 10. Das die Schicht 10 durchlaufende Licht wird dann an der Grenzfläche zwischen Schicht 10 und Substrat 8 zumindest teilweise reflektiert und kann nach abermaligem Durchlauf durch die Schicht 10 vom Detektor 13 detektiert werden.

Die magnetooptische Schicht 10 wird im allgemeinen auf ein kristallines Substrat 8 durch verschiedene chemische oder physikalische Techniken, wie z.B. Flüssigphasen-Epitaxie oder PVD-Prozesse wie Sputtern oder Laserablation, aufgebracht und besteht bevorzugterweise aus Eisen-Granaten. Bei Eisen-Granaten im Sinne der Erfindung handelt es sich um Verbindungen auf der Basis von Eisen-Granat (RE₃Fe₅O₁₂), wobei RE₃ drei Seltenerdmetall-Elemente umfaßt, insbesondere Yttrium (Y), Thulium (Tm) oder Lutetium (Lu), und wobei Eisen (Fe) und/ oder Sauerstoff (O) zumindest teilweise durch jeweils ein oder mehrere andere Elemente substituiert werden können. Bei den drei Seltenerdmetall-Elementen (RE₃) kann es sich um drei identische Seltenerdmetall-Elemente aber auch um eine beliebige Kombination aus unterschiedlichen Seltenerdmetall-Elementen handeln.

Als Material für das Substrat werden bevorzugterweise Gallium-Granate verwendet. Im Sinne der Erfindung sind hierunter Verbindungen auf der Basis von Gallium-Granat (RE₃Ga₅O₁₂) zu verstehen, wobei RE₃ drei Seltenerdmetall-Elemente umfaßt, insbesondere Scandium (Sc), Samarium (Sm), Gadolinium (Gd), Thulium (Tm) oder Lutetium (Lu), und wobei Gallium (Ga) und/ oder Sauerstoff (O) teilweise durch jeweils ein oder mehrere andere Elemente substituiert werden können. Bei den drei Seltenerdmetall-Elementen (RE₃) kann es sich um drei identische Seltenerdmetall-Elemente aber auch um eine beliebige Kombination aus unterschiedlichen Seltenerdmetall-Elementen handeln.

Zur Erhöhung der Empfindlichkeit der magnetooptischen Schicht kann mindestens ein Seltenerdmetall-Element (RE), insbesondere Yttrium (Y), in den Eisen-Granaten zumindest teilweise durch Wismut (Bi) substituiert werden.

Mit zunehmender Substituierung von Seltenerdmetallen (RE), insbesondere Yttrium (Y), durch Wismut (Bi) nimmt allerdings die Gitterfehlanpassung von Substrat und magnetooptischer Sicht zu, was zu Spannungen und Versetzungen in der magnetooptischen Schicht führen kann und der Zunahme der Empfindlichkeit der magnetooptischen Schicht entgegenwirkt. Diese Gitterfehlanpassung kann beispielsweise dadurch herabgesetzt werden, daß in den Gallium-Granaten des Substrats Sauerstoff (O) zumindest teilweise durch Schwefel (S) substituiert wird. Alternativ oder zusätzlich hierzu kann dies auch dadurch erreicht werden, daß in den Gallium-Granaten des Substrats Gallium (Ga) und/ oder zumindest ein Seltenerdmetall-Element (RE) zumindest teilweise durch Kalzium (Ca) und/ oder Magnesium (Mg) und/ oder Zirkon (Zr) substituiert wird.

Die Gitterfehlanpassung zwischen dem Substrat und einer magnetooptischen Schicht 10 auf der Basis von Eisen-Granaten kann auch dadurch reduziert werden, daß Eisen (Fe) in der magnetooptischen Schicht 10 zumindest teilweise durch Gallium (Ga) und/oder Al³⁺-Ionen substituiert wird.

Folgende Tabelle zeigt drei Beispiele (1 bis 3) für Schichtsysteme aus einer magnetooptischen Schicht und einem entsprechend angepaßten Substrat:

| | Magnetooptische Schicht | Substrat |
|---|---|---|
| 1 | YBi₂Fe_{3,8}Ga_{1,2}O₁₂ | Gd₃Ga₅(Mg,Zr,Ca)S₁₂ |
| 2 | Lu₃₋ₓBiₓFe_{5-y-z}Ga_{y}Al_{z}O₁₂, mit 0,5<x<2; 0<y<2 und 0<z<1. | Gd₃Ga₅(Mg,Zr,Ca)O₁₂ |
| 3 | Lu₃₋ₓBiₓFe_{3,8}Ga_{1,2}O₁₂, mit 1<x<1,4 | Gd₃Ga₅(Mg,Zr,Ca)O₁₂ oder Gd₃Ga₅ (Mg,Zr,Ca)S₁₂ |

In den magnetooptischen Schichten aller Beispiele 1 bis 3 ist das Seltenerdmetall-Element, Yttrium (Y) bzw. Lutetium (Lu), der Eisen-Granate teilweise durch Wismut (Bi) substituiert, um eine Vergrößerung der Empfindlichkeit der Schicht zu erreichen. In den gezeigten Beispielen ist außerdem Eisen (Fe) teilweise durch Gallium (Ga) ersetzt, in Beispiel 2 ist Eisen (Fe) zusätzlich zum Teil durch Aluminium (Al³⁺) substituiert, um die Gitterfehlanpassung zum Substrat zu reduzieren. Die angegebenen Größenbereiche der Indizes x, y und z in den Beispielen 2 und 3 erlauben eine Vielzahl realisierbarer Zusammensetzungen der magnetooptischen Schichten.

Bei den Substraten handelt es sich in allen gezeigten Beispielen um Gadolinium-Gallium-Granate, in deren Gitter Magnesium (Mg), Zirkon (Zr) und Kalzium (Ca) eingebaut sind. Prinzipiell können anstelle von Gadolinium (Gd) auch andere Seltenerdmetalle, insbesondere Samarium (Sm), eingesetzt werden. Zur verbesserten Gitteranpassung an die jeweilige magnetooptische Schicht wurde in den Substratschichten der Beispiele 1 und 3 Sauerstoff (O) durch Schwefel (S) ersetzt.

Bei den oben beschriebenen Ausführungsbeispielen sind die Lichtquelle 11 und die magnetooptische Schicht 10 vorzugsweise so angeordnet, daß das von der Lichtquelle 11 ausgehende Licht 16 im Brewsterwinkel auf die magnetooptische Schicht 10 trifft. Der Brewsterwinkel ist derjenige Winkel, dessen Tangens gleich dem Brechungsindex der mägnetooptischen Schicht 10 ist. Ein Teil des im Brewsterwinkel auf die magnetooptische Schicht 10 treffenden Lichts 16 wird reflektiert und weist eine senkrecht zur Einfallsebene stehende Polarisation, sog. s-Polarisation, auf, während der andere Teil des im Brewsterwinkel einfallenden Lichts 16 in die Schicht hinein gebrochen wird und eine parallel zur Einfallsebene stehende Polarisation, sog. p-Polarisation, aufweist.

Der Brewsterwinkel liegt vorzugsweise zwischen etwa 60 und 70 Grad. Bei typischen Brechungsindizes der verwendeten Granate zwischen etwa 2,2 und 2,4 liegt dieser insbesondere zwischen etwa 66,5 und 67,4 Grad.

Vorzugsweise weist das im Brewsterwinkel auf die magnetooptische Schicht 10 treffende Licht 16 eine zur Einfallsebene parallele Polarisation, sog. p-Polarisation, auf. In diesem Fall wird nahezu kein Licht reflektiert und fast das gesamte auf die magnetooptische Schicht 10 treffende Licht in die Schicht eingekoppelt. Auf diese Weise wird eine besonders effektive Lichteinkopplung erreicht, ohne daß eine Antireflex-Beschichtung der Schicht 10 erforderlich wäre.

## Patentansprüche

1. Vorrichtung zur Untersuchung magnetischer Eigenschaften von Objekten, insbesondere Blattgut, wie z.B. Banknoten (20), mit
- einer magnetooptischen Schicht (10), deren optische Eigenschaften von den magnetischen Eigenschaften des Objekts beeinflußbar sind,
- einer Lichtquelle (11) zur Erzeugung von Licht, welches in die magnetooptische Schicht (10) eingekoppelt wird, und
- einem Detektor (13) zur Detektion von Licht, welches von der magnetooptischen (10) Schicht transmittiert und/oder reflektiert wird,
wobei
- die magnetooptische Schicht (10) zumindest teilweise aus Eisen-Granaten besteht, wobei
- Eisen-Granate durch Verbindungen auf der Basis von Eisen-Granat (RE₃Fe₅O₁₂) gebildet werden,
- RE₃ drei Seltenerdmetall-Elemente umfaßt und
- Eisen (Fe) und/oder Sauerstoff (O) zumindest teilweise durch jeweils ein oder mehrere andere Elemente substituiert werden können,
- die magnetooptische Schicht (10) auf einem Substrat (8) aufgebracht ist, welches zumindest teilweise aus Gallium-Granaten besteht, wobei
- Gallium-Granate durch Verbindungen auf der Basis von Gallium-Granat (RE₃Ga₅O₁₂) gebildet werden,
- RE₃ drei Seltenerdmetall-Elemente umfaßt und
- Gallium (Ga) und/ oder Sauerstoff (O) zumindest teilweise durch jeweils ein oder mehrere andere Elemente substituiert werden können,
**dadurch gekennzeichnet, daß**
- im Substrat (8) Sauerstoff (O) zumindest teilweise durch Schwefel (S) substituiert ist.

2. Vorrichtung nach Anspruch 1, **dadurch gekennzeichnet, daß** in der magnetooptischen Schicht (10) mindestens ein Seltenerdmetall-Element (RE) zumindest teilweise durch Wismut (Bi) substituiert ist.

3. Vorrichtung nach einem der Ansprüche 1 bis 2, **dadurch gekennzeichnet, daß** in der magnetooptischen Schicht (10) Eisen (Fe) zumindest teilweise durch Gallium (Ga) oder Aluminium-Ionen (Al³⁺) substituiert ist.

4. Vorrichtung nach einem Ansprüche 1 bis 3, **dadurch gekennzeichnet, daß** in den Gallium-Granaten des Substrats Gallium (Ga) und/oder mindestens ein Seltenerdmetall-Element (RE) zumindest teilweise durch Kalzium (Ca) und/oder Magnesium (Mg) und/oder Zirkon (Zr) substituiert ist.

5. Vorrichtung nach einem der Ansprüche 1 bis 4, **dadurch gekennzeichnet, daß** die Lichtquelle (11) und die magnetooptische Schicht (10) so angeordnet sind, daß die Ausbreitungsrichtung des in die magnetooptische Schicht (10) eingekoppelten Lichts im wesentlichen parallel zu einer Grundfläche (9) der magnetooptischen Schicht (10) verläuft.

6. Vorrichtung nach einem der Ansprüche 1 bis 4, **dadurch gekennzeichnet, daß** die Lichtquelle (11) und die magnetooptische Schicht (10) so angeordnet sind, daß das Licht die magnetooptische Schicht (10) im wesentlichen senkrecht zu einer Grundfläche (9) der magnetooptischen Schicht (10) eingekoppelt wird.

7. Vorrichtung nach einem der Ansprüche 1 bis 6, **dadurch gekennzeichnet, daß** das Substrat (8) für das in die magnetooptische Schicht (10) einzukoppelnde Licht durchlässig ist und die vom Substrat (8) abgewandte Grundfläche (9) der magnetooptischen Schicht (10) mit einer Verspiegelung (6) zur Reflexion des in die magnetooptische Schicht (10) eingekoppelten Lichts versehen ist.

8. Vorrichtung nach einem der Ansprüche 1 bis 6, **dadurch gekennzeichnet, daß** das Substrat (8) für das in die magnetooptische Schicht (10) einzukoppelnde Licht undurchlässig ist

9. Vorrichtung nach einem der Ansprüche 1 bis 8, **dadurch gekennzeichnet, daß** die Lichtquelle (11) und die magnetooptische Schicht (10) so angeordnet sind, daß das von der Lichtquelle (11) ausgehende Licht (16) im Brewsterwinkel auf die magnetooptische Schicht (10) trifft.

10. Vorrichtung nach Anspruch 9, **dadurch gekennzeichnet, daß** der Brewsterwinkel vorzugsweise zwischen etwa 60 und 70 Grad liegt.

11. Vorrichtung nach einem der Ansprüche 9 bis 10, **dadurch gekennzeichnet, daß** das auf die magnetooptische Schicht (10) treffende Licht (16) eine zur Einfallsebene parallele Polarisation aufweist.

## Claims

1. An apparatus for examining magnetic properties of objects, in particular sheet material, such as bank notes (20), having
- a magneto-optic layer (10) whose optical properties are influenceable by the magnetic properties of the object,
- a light source (11) for producing light that is coupled into the magneto-optic layer (10), and
- a detector (13) for detecting light that is transmitted and/or reflected by the magneto-optic layer (10),
wherein
- the magneto-optic layer (10) consists at least partly of iron garnets, whereby
- iron garnets are formed by compounds based on iron garnet (RE₃Fe₅O₁₂),
- RE₃ comprises three rare earth metal elements, and
- iron (Fe) and/or oxygen (O) can be substituted at least partly by one or more other elements in each case,
- the magneto-optic layer (10) is applied to a substrate (8) that consists at least partly of gallium garnets, whereby
- gallium garnets are formed by compounds based on gallium garnet (RE₃Ga₅O₁₂),
- RE₃ comprises three rare earth metal elements, and
- gallium (Ga) and/or oxygen (O) can be substituted at least partly by one or more other elements in each case,
**characterized in that**
- oxygen (O) is substituted at least partly by sulfur (S) in the substrate (8).

2. An apparatus according to claim 1, **characterized in that** at least one rare earth metal element (RE) is substituted at least partly by bismuth (Bi) in the magneto-optic layer (10).

3. An apparatus according to either of claims 1 to 2, **characterized in that** iron (Fe) is substituted at least partly by gallium (Ga) or aluminum ions (Al³⁺) in the magneto-optic layer (10).

4. An apparatus according to any of claims I to 3, **characterized in that** gallium (Ga) and/or at least one rare earth metal medium (RE) is substituted at least partly by calcium (Ca) and/or magnesium (Mg) and/or zirconium (Zr) in the gallium garnets of the substrate.

5. An apparatus according to any of claims 1 to 4, **characterized in that** the light source (11) and the magneto-optic layer (10) are so disposed that the direction of propagation of the light coupled into the magneto-optic layer (10) extends substantially parallel to a base surface (9) of the magneto-optic layer (10).

6. An apparatus according to any of claims 1 to 4, **characterized in that** the light source (11) and the magneto-optic layer (10) are so disposed that the light is coupled into the magneto-optic layer (10) substantially perpendicular to a base surface (9) of the magneto-optic layer (10).

7. An apparatus according to any of claims 1 to 6, **characterized in that** the substrate (8) is transparent to the light to be coupled into the magneto-optic layer (10), and the base surface (9) of the magneto-optic layer (10) facing away from the substrate (8) is provided with a mirror plating (6) for reflecting the light coupled into the magneto-optic layer (10).

8. An apparatus according to any of claims 1 to 6, **characterized in that** the substrate (8) is opaque to the light to be coupled into the magneto-optic layer (10).

9. An apparatus according to any of claims 1 to 8, **characterized in that** the light source (11) and the magneto-optic layer (10) are so disposed that the light (16) emanating from the light source (11) hits the magneto-optic layer (10) at the Brewster angle.

10. An apparatus according to claim 9, **characterized in that** the Brewster angle is preferably between about 60 and 70 degrees.

11. An apparatus according to either of claims 9 to 10, **characterized in that** the light (16) hitting the magneto-optic layer (10) has a polarization parallel to the plane of incidence.

## Revendications

1. Dispositif d'examen des propriétés magnétiques d'objets, en particulier de produits en feuille, tels par exemple des billets de banque (20), comprenant :
- une couche magnéto-optique (10), dont les propriétés optiques sont influençables par les propriétés magnétiques de l'objet,
- une source de lumière (11) destinée à la génération de lumière, laquelle est injectée dans la couche magnéto-optique (10), et
- un détecteur (13) de détection de lumière, laquelle est transmise et/ou réfléchie par la couche magnéto-optique (10),
dans lequel
- la couche magnéto-optique (10) se compose pour le moins en partie de grenats de fer, où
- des grenats de fer sont formés par des combinaisons basées sur les grenats de fer (RE₃Fe₅O₁₂),
- RE₃ comprend trois éléments de métaux de terres rares et
- du fer (Fe) et/ou de l'oxygène (O) peuvent être substitués pour le moins
en partie par un ou plusieurs autres éléments à chaque fois,
- la couche magnéto-optique (10) est appliquée sur un substrat (8), lequel se compose pour le moins en partie de grenats de gallium, où
- des grenats de gallium étant formés par des combinaisons sur la base de grenat de gallium (RE₃Ga₅O₁₂),
- RE₃ comprend trois éléments de métaux de terres rares et
- du gallium (Ga) et/ou de l'oxygène (O) peuvent être substitués pour le moins en partie par un ou plusieurs autres éléments à chaque fois,
**caractérisé en ce que**
- de l'oxygène (O) est substitué pour le moins en partie par du soufre (S) dans le substrat (8).

2. Dispositif selon la revendication 1, **caractérisé en ce qu'**au moins un élément de métaux de terres rares (RE) est substitué pour le moins en partie par du bismuth (Bi) dans la couche magnéto-optique (10)

3. Dispositif selon l'une quelconque des revendications 1 à 2, **caractérisé en ce que** du fer (Fe) est substitué pour le moins en partie par du gallium (Ga) ou des ions d'aluminium (Al³⁺) dans la couche magnéto-optique (10).

4. Dispositif selon l'une quelconque des revendications 1 à 3, **caractérisé en ce que** du gallium (Ga) et/ou au moins un élément de métaux de terres rares (RE) est substitué pour le moins en partie par du calcium (Ca) et/ou du magnésium (Mg) et/ou du zirconium (Zr) dans les grenats de gallium du substrat.

5. Dispositif selon l'une quelconque des revendications 1 à 4, **caractérisé en ce que** la source de lumière (11) et la couche magnéto-optique (10) sont disposées de manière à ce que le sens de propagation de la lumière injectée dans la couche magnéto-optique (10) évolue pour l'essentiel parallèlement à une surface de base (9) de la couche magnéto-optique (10).

6. Dispositif selon l'une quelconque des revendications 1 à 4, **caractérisé en ce que** la source de lumière (11) et la couche magnéto-optique (10) sont disposées de manière à ce que la lumière soit injectée dans la couche magnéto-optique (10) pour l'essentiel perpendiculairement à une surface de base (9) de la couche magnéto-optique (10).

7. Dispositif selon l'une quelconque des revendications 1 à 6, **caractérisé en ce que** le substrat (8) est transparent pour la lumière injectée dans la couche magnéto-optique (10) et la surface de base (9) de la couche magnéto-optique (10) au dos du substrat (8) est pourvue d'une argenture (6) destinée à réfléchir la lumière injectée dans la couche magnéto-optique (10).

8. Dispositif selon l'une quelconque des revendications 1 à 6, **caractérisé en ce que** le substrat (8) est opaque pour la lumière injectée dans la couche magnéto-optique (10).

9. Dispositif selon l'une quelconque des revendications 1 à 8, **caractérisé en ce que** la source de lumière (11) et la couche magnéto-optique (10) sont disposées de manière à ce que la lumière (16) émanant de la source de lumière (11) rencontre la couche magnéto-optique (10) selon l'angle de Brewster.

10. Dispositif selon la revendication 9, **caractérisé en ce que** l'angle de Brewster est de préférence compris environ entre 60 et 70 degrés.

11. Dispositif selon l'une quelconque des revendications 9 à 10, **caractérisé en ce que** la lumière (16) rencontrant la couche magnéto-optique (10) présente une polarisation parallèle au plan d'incidence.
